# EUROPEAN PATENT APPLICATION

(11) **EP 2 966 402 A1**
(43) Date of publication of application: **13.01.2016**
(21) Application number: 14761023.2
(22) Date of filing: 07.03.2014
(51) Int. Cl.: G01C 9/10

(54) **PLUMB-BOB CALIBRATION APPARATUS AND GLASS-WIPING ROBOT HAVING THE PLUMB-BOB CALIBRATION APPARATUS**

(30) Priority: 08.03.2013 CN 201310074963
(71) Applicant: Ecovacs Robotics (Suzhou) Co., Ltd., Wuzhong District Suzhou Jiangsu 215168 (CN)
(72) Inventor: FENG, Yongbing, Suzhou Jiangsu 215168 (CN)
(74) Representative: Dr. Weitzel & Partner
(86) International application number: PCT/CN2014/073037
(87) International publication number: WO 2014/135115

(57) **Abstract**

The present invention belongs to the field of small household appliances manufacturing technology, which relates to a plumb-bob calibration apparatus (21, 22) and a glass-wiping robot having the plumb-bob calibration apparatus. The plumb-bob calibration apparatus (21, 22) comprises a housing. The housing has arranged therein an orbit space (7) and an action element (2). The action element (2) moves within the orbit space (7). The housing also has arranged therein a sensor component that senses induction signals of the action element (2) when at different positions in the orbit space (7). Use of the plumb-bob calibration apparatus aids the working of an acceleration sensor in the glass-wiping robot, and verifies the accuracy of a detection result, thus allowing the glass-wiping robot to make horizontal or vertical movements with reduced linear error at all times.

## Description

### Field of the Invention

The present invention relates to a plumb-bob calibration apparatus and a glass-wiping robot having the plumb-bob calibration apparatus, and belongs to the technical field of mechanical manufacturing technology of small home appliances.

### Background of the prior art

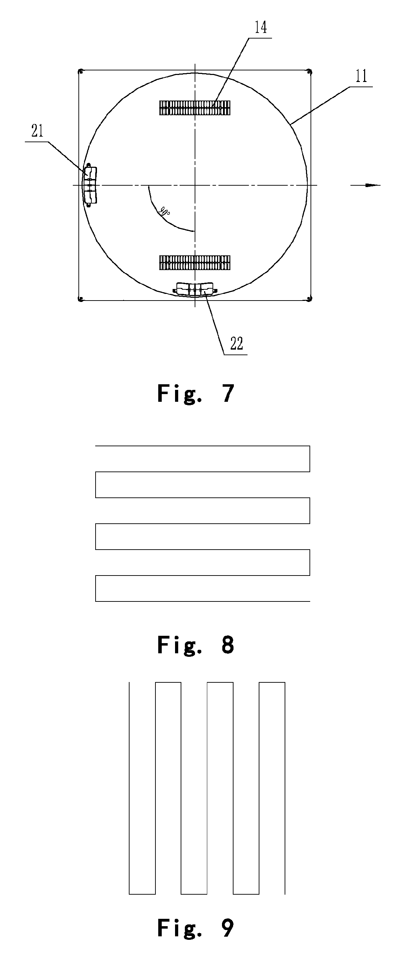

All the existing glass-cleaning robots realize their machine movement on a vertical glass surface by using pedrails or wheels. In order to enhance the cleaning efficiency, generally, the moving track of the machines is designed as a horizontal or vertical track (as shown in Figs. 8-9). So far, for the glass-cleaning robots, there are two major methods for controlling the horizontal or vertical movement.

In the first solution, the vertical movement of the glass-cleaning robot is performed by means of rope traction. As in the technical solution disclosed by the patent CN201482774U, a hoister is arranged on the top of the glass to be cleaned or on the wall, and one end of a rope is connected to the hoister and the other end is connected to the top of the glass-cleaning robot. When the hoister rotates, the rope is released or retracted, hereby driving the glass-cleaning robot to move upward and downward vertically. However, in this solution, the control of the glass-cleaning robot by the hoister by means of the rope needs the cooperation of various mechanisms, resulting in the complicated structure of the hoister and rendering the assembly and movement inconvenient. In addition, this configuration merely realizes the vertical movement of the robot, and constraints the horizontal movement control of the glass-cleaning robot to some extent.

In the second solution, the horizontal or vertical movement of the glass-cleaning robot is controlled by an acceleration sensor. The acceleration sensor is installed on the glass-cleaning robot, and is connected with a control unit. The acceleration sensor detects the movement state of the glass-cleaning robot and feeds back the detection result to the control unit. If a tilt or a deviation from the predetermined path occurs, the control unit issues an instruction for performing a corresponding adjustment. However, in this solution, the horizontal or vertical state of the glass-cleaning robot is detected by an electronic element such as the acceleration sensor, and the long-term use of electronic element will lead to a certain accumulation error. When the glass-cleaning robot might deviate from the direction of the originally planned path, the detection result of the acceleration sensor would still indicate that the glass-cleaning robot is in the horizontal or vertical state. As a result, the glass-cleaning robot cannot move along the originally planned path, hereby largely affecting the cleaning efficiency of the glass-cleaning robot on the glass surface.

### Summary of the Invention

In view of the above problems, the present invention provides a plumb-bob calibration apparatus and a glass-wiping robot having the plumb-bob calibration apparatus, in which the plumb-bob calibration apparatus can aid the operation of the acceleration sensor in the glass-wiping robot and verify the accuracy of the measurement result of the acceleration sensor so that the glass-wiping robot can horizontally or vertically move with a reduced linear error at all times.

The present invention solves the problems by the following technical solutions.

The present invention provides a plumb-bob calibration apparatus comprising a housing. The housing has arranged therein an orbit space and an action element. The action element moves within the orbit space. The housing also has arranged therein a sensor component that senses induction signals for different positions of the action element within the orbit space.

Further, in order to facilitate the movement of the action element within the orbit space, the orbit space is an arc orbit and the action element is a rolling ball.

The number of the sensor component is one or more, and the sensor component is arranged on the sidewall, bottom wall and/or top wall of the orbit space.

In order to accurately reflect the horizontal state of horizontal position or plane, the lowest position of the orbit is the lowest location when the plumb-bob calibration apparatus is placed absolutely horizontally. In a preferable solution, when the number of the sensor component is one, the sensor component is arranged at the lowest location of the orbit space, and when the number of the sensor components is more than one, one of the sensor components is arranged at the lowest location of the orbit space, and the remaining sensor components are arranged uniformly on both sides of the lowest location.

If the number of the sensor components is an odd number, one of the sensor components is arranged at the lowest location of the orbit space, and the remaining sensor components are arranged uniformly and symmetrically on both sides of the lowest location. If the number of the sensor components is an even number, one of the sensor components is arranged at the lowest location of the orbit space, the remaining sensor components are arranged uniformly on both sides of the lowest location, and one less sensor component is arranged one side of the lowest location compared with the other side. This can also achieve the corresponding functions.

In one embodiment, the sensor component comprises a transmitter and a receiver which may be a light transmitter and a light receiver respectively.

In another embodiment, the sensor component is a Hall element, and the action element contains a magnetic element.

Further, in order to ensure that the plumb-bob calibration apparatus still keep its efficient operation state after being flipped upside down, the orbit space comprises a bottom arc orbit and a top arc orbit. Preferably, the bottom arc orbit and the top arc orbit are engaged into a circle.

The sensor component is provided correspondingly to the action element, and the sensor component senses the induction signals when the action element moves in the bottom arc orbit or the top arc orbit.

The present invention also provides a glass-wiping robot having the plumb-bob calibration apparatus as described above, comprising a main machine body and a control unit. The main machine body has arranged at the bottom thereof an adsorption unit and a walking unit. The main machine body is adsorbed onto a vertical glass surface by the adsorption unit. The sensor component in the plumb-bob calibration apparatus is connected with the control unit, and according to the induction signals of the sensor component, the control unit determines whether the main machine body is in a vertical state.

The entire operation process of the glass-wiping robot comprises a horizontal walking and a vertical walking. Preferably, the glass-wiping robot comprises two plumb-bob calibration apparatuses which are a first plumb-bob calibration apparatus and a second plumb-bob calibration apparatus. The first plumb-bob calibration apparatus and the second plumb-bob calibration apparatus are arranged perpendicularly to each other in the main machine body.

The first plumb-bob calibration apparatus is arranged horizontally in the main machine body being placed vertically, and the second plumb-bob calibration apparatus is arranged vertically in the main machine body. When the glass-wiping robot operates along a vertical path, the first plumb-bob calibration apparatus plays the role of calibration, and when along a horizontal path, the second plumb-bob calibration apparatus plays the role of calibration.

The main machine body further comprises an acceleration sensor connected with the control unit. According to the induction signals of the sensor component, the control unit determines whether the acceleration sensor is in a normal operation state. If it is determined that the acceleration sensor is in an abnormal operation state, the acceleration sensor is corrected.

The plumb-bob calibration apparatus has a simple structure, can accurately find out the horizontal position or the horizontal state of detected plane, and can convert the position information into an electrical signal to be outputted. In addition, the plumb-bob calibration applied in the glass-wiping robot can aid the operation of the acceleration sensor and verify the accuracy of the detection results of the acceleration sensor, so that the glass-wiping robot can move horizontally or vertically with a reduced linear error at all times

Hereinafter, the technical solutions of the present invention will be described in detail by reference to specific embodiments in combination with the accompanying drawings.

### Description of attached drawings

Fig. 1 is a schematic exploded view of the plumb-bob calibration apparatus (in which the sensor component comprises a transmitter and a receiver) according to the first embodiment of the present invention.
Fig. 2 is a schematic view of the plumb-bob calibration apparatus in a horizontal state according to the present invention.
Fig. 3 is a schematic view of the plumb-bob calibration apparatus in a tilted state according to the present invention.
Fig. 4 is a schematic top view of the glass-wiping robot having the plumb-bob calibration apparatus according to the present invention.
Fig. 5 is a schematic view of the plumb-bob calibration apparatus (in which the sensor component is a Hall element) according to the third embodiment of the present invention.
Fig. 6 is a schematic view showing that the glass-wiping robot having the plumb-bob calibration apparatus according to the present invention moves upward vertically.
Fig. 7 is a schematic view showing that the glass-wiping robot having the plumb-bob calibration apparatus according to the present invention horizontally moves rightward.
Fig. 8 is a schematic view of the traditional path planning (in a horizontal direction) of the glass-wiping robot.
Fig. 9 is a schematic view of the traditional path planning (in a vertical direction) of the glass-wiping robot.

### Reference numerals

1: top cover
2: action element
3: base
4: receiver
5: transmitter
6: rolling ball
7: orbit space
8: Hall element
11: main machine body
14: walking unit
17: top arc orbit
21: first plumb-bob calibration apparatus
22: second plumb-bob calibration apparatus
27: bottom arc orbit

### Detailed Description of Preferred Embodiments

### Plumb-bob calibration apparatus

### (First Embodiment)

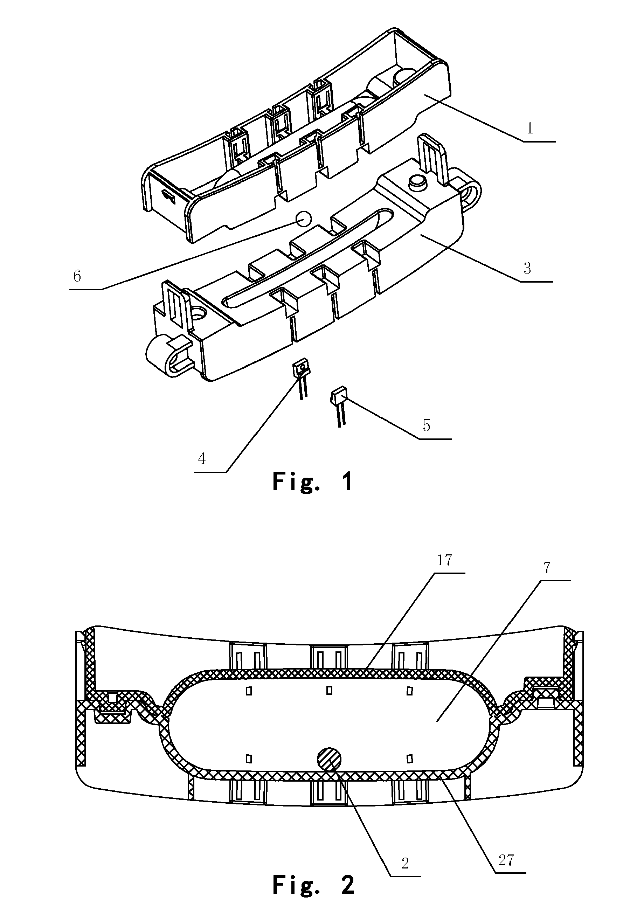

As shown in Figs. 1-3, the plumb-bob calibration apparatus of the present invention comprises a housing, wherein the housing consists of a top cover 1 and a base 3, and an orbit space 7 is arranged between the top cover 1 and the base 3. An action element 2 can move within the orbit space 7. The housing has arranged therein a sensor component that senses inductions signals for different positions of the action element 2 within the orbit space. The number of the sensor component is one or more, and the sensor component is arranged on the side wall, bottom wall and/or top wall of the orbit space 7.

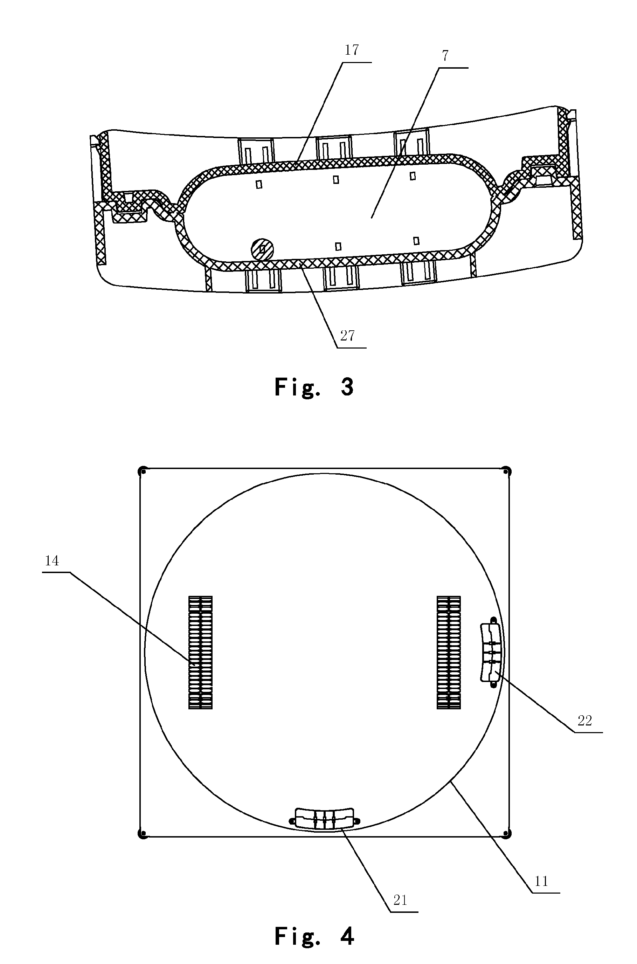

As the plumb-bob calibration apparatus is tilted, the action element 2 may move between the positions having different heights within the orbit space. Generally, the lowest position of the sliding orbit is set as the lowest location when the plumb-bob calibration apparatus is placed in an absolutely horizontal direction. If the number of the sensor component is only one, the sensor component is arranged at the lowest location of the orbit space 7. If the number of the sensor components is more than one, the number is preferably an odd number. One of the sensor components is arranged at the lowest location of the orbit space 7, and the remaining sensor components are arranged symmetrically and uniformly with respect to the lowest location. Of course, the number of the sensor components may be an even number. In this case, one less sensor component is arranged on one side of the lowest location of the orbit space, compared with the other side. This can also achieve the corresponding functions. In particular, in the exploded schematic view of the plumb-bob calibration apparatus as shown in Fig. 1, the action element 2 uses a rolling ball 6, and a top arc orbit 17 and a bottom arc orbit 27 are arranged inside the top cover 1 and the base 3 respectively and are engaged into a circle such that the rolling ball 6 can move in the top or bottom arc orbit. The sensor component for signal detection comprises a transmitter 5 and a receiver 4 which may be a light transmitter and a light receiver, respectively. Three pairs of light transmitters and receivers are arranged on the side wall of each of the top arc orbit 17 and the bottom arc orbit 27. One pair of transmitter and receiver are arranged on the lowest location of the bottom arc orbit 27, and the remaining two pairs of transmitters and receivers are arranged symmetrically and uniformly with respect to the lowest location. The sensor components of the top arc orbit 17 and the sensor components of the bottom arc orbit 27 are arranged symmetrically about the engagement surface of the top cover 1 and the base 3. In the case where the top arc orbit 17 and the bottom arc orbit 27 are engaged, the plumb-bob calibration apparatus can be used either in a normal mode or a reversed mode. When the plumb-bob calibration apparatus is used in the normal mode, the rolling ball 6 moves in the bottom arc orbit 27, and when the plumb-bob calibration apparatus is used in the reversed mode, the rolling ball 6 moves in the top arc orbit 17 because the top arc orbit 17 locates at a lower position. Of course, the top arc orbit 17 and the bottom arc orbit 27 can be used separately, and each of them needs to be arranged with one rolling ball 6. As shown in Fig. 2, the plumb-bob calibration apparatus is placed in an absolutely horizontal direction, and the rolling ball 6 stays at the lowest location of the bottom arc orbit 27. The light emission signal at this location is blocked by the rolling ball 6, and it is indicated that the plumb-bob calibration apparatus is in a horizontal placement state. Fig. 3 is a schematic view of the plumb-bob calibration apparatus in a tilted state. As shown in Figs. 1 and 3, the rolling ball 6 stays on the left side of the arc orbit, and the light emission signal on the left side is blocked by the rolling ball 6. It is indicated that the plumb-bob calibration apparatus is tilted leftward. Likewise, when the light emission signal on the right side is blocked, it is indicated that the plumb-bob calibration apparatus is tilted rightward. If the plumb-bob calibration apparatus is flipped upside down, the rolling ball 6 falls into the top arc orbit 17, and the same detection effect can also be achieved.

### (Second Embodiment)

The difference of the second embodiment from the first embodiment lies in the number of the sensor components. As can be seen from the comparison with Fig. 4, in the first embodiment, the sensor components comprise three pairs of optical couplers arranged in each of the top and bottom arc orbits, while in the present embodiment, only one pair of light transmitter and light receiver are arranged at the lowest location of each of the top and bottom arc orbits. If the light emission signal is blocked, it is indicated that the plumb-bob calibration apparatus is in the horizontal state. Otherwise, it is indicated that the plumb-bob calibration apparatus is in the tilted state.

Other technical features in the present embodiment are the same as those in the first embodiment, and will not be described here. Please refer to the first embodiment for the details.

### (Third Embodiment)

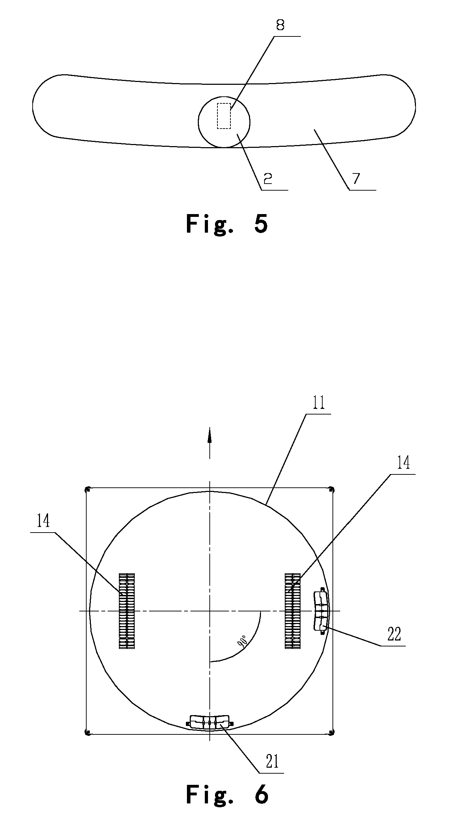

Fig. 5 is a schematic view of the mechanism of the third embodiment. As shown in Fig. 5, the differences of the present embodiment from the previous two embodiments lie in the type of the sensor component and the action element 2. As can be seen from the comparison with Fig. 4, in the previous two embodiments, the sensor component comprises a light transmitter and a light receiver. As shown in Fig. 5, in the present embodiment, the sensor component is a Hall element, and accordingly, the action element 2 contains a magnetic element. When the action element 2 stays at the lowest location of the arc orbit 7, the Hall element 8 senses a magnetic emission signal of the magnetic element. In addition to the Hall element and the coordinated magnetic element in the present embodiment or the light transmitter and the light receiver in the first embodiment, the sensor component may use other various sensor components such as a metal sensor switch and a coordinated metal element contained in the rolling ball.

Other technical features in the present embodiment are the same as those in the previous two embodiments, and will not be described here.

### Glass-Wiping Robot

The glass-wiping robot of the present invention comprises a main machine body 11 and a control unit. The main machine body 11 has arranged at the bottom thereof an adsorption unit and a walking unit 14. The main machine body 11 is adsorbed onto a vertical glass surface by the adsorption unit. The control unit receives induction signals of the sensor component in the plumb-bob calibration apparatus arranged in the main machine body 11. The glass-wiping robot comprises two plumb-bob calibration apparatuses which are a first plumb-bob calibration apparatus 21 and a second plumb-bob calibration apparatus 22. These two plumb-bob calibration apparatuses are arranged perpendicularly to each other in the main machine body 11. Fig. 6 shows the installation fashion of the plumb-bob calibration apparatuses in the glass-wiping robot. When the glass-wiping robot is adsorbed on the vertical glass surface, the first plumb-bob calibration apparatus 21 is installed at the bottom of the main machine body 11, and the second plumb-bob calibration apparatus 22 is installed in the main machine body 11 at an angle of 90° with respect to the first plumb-bob calibration apparatus 21.

As shown in Figs. 1-2 and 6, the working principle of the plumb-bob calibration apparatuses will be explained by taking an example in which the glass-wiping robot having plumb-bob calibration apparatuses walks in the vertical direction. The glass-wiping robot having plumb-bob calibration apparatuses is switched on and is placed on the glass surface. At this time, the first plumb-bob calibration apparatus 21 plays the role of calibration. Specifically, the rolling ball 6 stays within the bottom arc orbit 27 in the base 3, and the sensor components in the base 3 play the role of calibration. If the glass-wiping robot moves downward, the rolling ball 6 stays within the top arc orbit 17 in the top cover 1. At this time, the sensor components in the top cover 1 play the role of calibration.

When the glass-wiping robot moves upward vertically, in the first plumb-bob calibration apparatus 21, the rolling ball 6 moves in the bottom arc orbit 27 inside the base 3, and the sensor components in the base 3 sense induction signals for the different positions of the rolling ball 6 in the bottom arc orbit 27. When the glass-wiping robot is in the vertical state, the rolling ball 6 stays at the lowest location of the bottom arc orbit 27, and the corresponding sensor component arranged at the lowest location of the bottom arc orbit 27 senses an induction signal (for example, the sensor component is a Hall element, and a magnetic element is arranged in the rolling ball 6). When the glass-wiping robot is tilted, the sensor component at the lowest location cannot sense signal and the sensor component at another location senses a signal.

Generally, an acceleration sensor is arranged to determine the horizontal or vertical direction in the glass-wiping robot, and the plumb-bob calibration apparatuses can determine whether the acceleration sensor is in the normal operation state. When the plumb-bob calibration apparatuses operate, if the sensor component at the lowest location detects an induction signal, it is indicated that the glass-wiping robot is in the vertical state as shown in Fig. 2. Otherwise, it is indicated that the glass-wiping robot deviates from the vertical state as shown in Fig. 3. As shown in Fig. 6, if the control unit determines that the glass-wiping robot is in the vertical state according to the induction signal of the sensor component, and the acceleration sensor determines that the glass-wiping robot is in the tilted state, the control unit determines that the acceleration sensor has a large error. At this time, the control unit corrects the acceleration sensor.

To be specific, when the glass-wiping robot operates practically, the acceleration sensor detects the direction of the glass-wiping robot firstly. If the acceleration sensor detects that the glass-wiping robot is tilted, the glass-wiping robot is adjusted to the vertical state, and the first plumb-bob calibration apparatus 21 verifies whether the glass-wiping robot is really vertical. After it is confirmed that the glass-wiping robot is vertical, the glass-wiping robot starts to operate. In the operating process in which the glass-wiping robot moves upward, if the acceleration sensor detects that the glass-wiping robot deviates from the predetermined vertical direction, the glass-wiping robot is adjusted to the vertical direction by the acceleration sensor. At regular intervals, the glass-wiping robot stops walking, and the plumb-bob calibration apparatuses verify the acceleration sensor. If both the plumb-bob calibration apparatuses and the acceleration sensor detect that the glass-wiping robot is in the vertical state, it is indicated that the detection of the acceleration sensor has no error, and the glass-wiping robot continues to walk. If the acceleration sensor does not detect that the glass-wiping robot deviates from the predetermined vertical direction, but the first plumb-bob calibration apparatus does, it is indicated that the detection of the acceleration sensor has a large error, and the direction of the glass-wiping robot is adjusted to the vertical state by reference to the plumb-bob calibration apparatus. Meanwhile, the acceleration sensor is restored to the proper state and then the glass-wiping robot continues to walk.

As shown in Fig. 7, when the glass-wiping robot having plumb-bob calibration apparatuses operates by walking rightward in the horizontal state, the second plumb-bob calibration apparatus 22, instead of the first plumb-bob calibration apparatus 21, starts to exert its function, and its working principle is the same as that at the time of walking upward in the vertical state.

## Claims

1. A plumb-bob calibration apparatus comprising a housing, **characterized in that**: the housing has arranged therein an orbit space (7) and an action element (2), the action element (2) moves within the orbit space (7), the housing also has arranged therein a sensor component that senses induction signals for different positions of the action element (2) within the orbit space (7).

2. The plumb-bob calibration apparatus according to claim 1, **characterized in that**: the orbit space is an arc orbit, and the action element (2) is a rolling ball (6).

3. The plumb-bob calibration apparatus according to claim 1, **characterized in that**: the number of the sensor component is one or more, and the sensor component is arranged on the sidewall, bottom wall and/or top wall of the orbit space (7).

4. The plumb-bob calibration apparatus according to claim 3, **characterized in that**: when the number of the sensor component is one, the sensor component is arranged at the lowest location of the orbit space (7); and when the number of the sensor components is more than one, one of the sensor components is arranged at the lowest location of the orbit space (7), and the remaining sensor components are arranged uniformly on both sides of the lowest location.

5. The plumb-bob calibration apparatus according to claim 1, **characterized in that**: the sensor component comprises a transmitter (5) and a receiver (4).

6. The plumb-bob calibration apparatus according to claim 1, **characterized in that**: the sensor component is a Hall element (8), and the action element contains a magnetic element.

7. The plumb-bob calibration apparatus according to claim 1, **characterized in that**: the orbit space (7) comprises a bottom arc orbit (27) and a top arc orbit (17).

8. The plumb-bob calibration apparatus according to claim 7, **characterized in that**: the sensor component is provided correspondingly to the action element (2), and the sensor component senses the induction signals when the action element (2) moves in the bottom arc orbit or the top arc orbit.

9. A glass-wiping robot having the plumb-bob calibration apparatus according to any one of claims 1-8, comprising a main machine body (11) and a control unit, the main machine body (11) has arranged at the bottom thereof an adsorption unit and a walking unit (14), the main machine body (11) is adsorbed onto a vertical glass surface by the adsorption unit, **characterized in that**: the sensor component in the plumb-bob calibration apparatus is connected with the control unit, and according to the induction signals of the sensor component, the control unit determines whether the main machine body is in a vertical state.

10. The glass-wiping robot according to claim 9, **characterized in that**: the glass-wiping robot comprises two plumb-bob calibration apparatuses which are a first plumb-bob calibration apparatus (21) and a second plumb-bob calibration apparatus (22), the first plumb-bob calibration apparatus (21) and the second plumb-bob calibration apparatus (22) are arranged perpendicularly to each other in the main machine body (11).

11. The glass-wiping robot according to claim 10, **characterized in that**: the first plumb-bob calibration apparatus (21) is arranged horizontally in the main machine body (11) being vertically placed, and the second plumb-bob calibration apparatus (22) is arranged vertically in the main machine body (11).

12. The glass-wiping robot according to claim 9, **characterized in that**: the main machine body (11) further comprises an acceleration sensor connected with the control unit, and according to the induction signals of the sensor component, the control unit determines whether the acceleration sensor is in a normal operation state.
